Europäisches Patentamt

European Patent Office

Office européen des brevets

(19)

(11) **EP 1 108 202 B1**

(12) **FASCICULE DE BREVET EUROPEEN**

(45) Date de publication et mention
de la délivrance du brevet:
**26.01.2005 Bulletin 2005/04**

(21) Numéro de dépôt: **00938873.7**

(22) Date de dépôt: **31.05.2000**

(51) Int Cl.7: **G01L 3/10**, G01L 5/22,
G01D 5/14, B62D 5/00,
G01B 7/30

(86) Numéro de dépôt international:
**PCT/FR2000/001510**

(87) Numéro de publication internationale:
**WO 2001/001097 (04.01.2001 Gazette 2001/01)**

(54) **CAPTEUR MAGNETIQUE DE COUPLE AVEC DEUX SOUS-ENSEMBLES**

MAGNETISCHER DREHMOMENTWANDLER MIT ZWEI UNTERFRUPPEN

MAGNETIC TORQUE TRANSDUCER WITH TWO SUB-GROUPS

(84) Etats contractants désignés:
**DE FR**

(30) Priorité: **24.06.1999 FR 9908085**

(43) Date de publication de la demande:
**20.06.2001 Bulletin 2001/25**

(73) Titulaire: **SNR ROULEMENTS
F-74010 Annecy Cedex (FR)**

(72) Inventeurs:
• **DESBIOLLES, Pascal
F-74570 Thorens-Glieres (FR)**
• **NICOT, Christophe
F-74330 Epagny (FR)**
• **PEILLOUD, Fernand
F-74540 Alby sur Cheran (FR)**

(74) Mandataire: **Geismar, Thierry
Bouju Derambure Bugnion
18 Quai du Point du Jour
92659 Boulogne Cedex (FR)**

(56) Documents cités:
**EP-A- 0 427 882          US-A- 5 501 110
US-A- 5 589 769**

**Description**

L'invention se rapporte au domaine technique des capteurs de couple.

L'invention vise en particulier, mais non exclusivement, le domaine des capteurs de couple mis en oeuvre dans des systèmes de direction assistée de véhicules.

De tels systèmes comportent conventionnellement un capteur de couple monté en relation avec le dispositif de direction du véhicule.

On connaît déjà, dans l'art antérieur, des capteurs de couple mettant en oeuvre l'effet Hall, par exemple dans le document FR-A-2 689 633.

On connaît également des capteurs de couple qui détectent le déplacement relatif entre d'une part un motif magnétique associé à une pièce qui se déforme sous l'action du couple exercé et d'autre part un capteur à effet Hall associé à une pièce sensiblement non contrainte.

De tels dispositifs reposent sur l'utilisation d'un motif magnétique représentant une transition rapide en face de laquelle est positionné un capteur à effet Hall à sortie analogique.

De tels dispositifs présentent les inconvénients suivants:

- la sensibilité du capteur peut varier en fonction de la température. En effet, celle-ci prend en compte la dérive du capteur et des aimants. Certains principes de correction consistent à utiliser un capteur à effet Hall compensant partiellement la dérive en température des aimants ou une électronique de traitement appropriée. Ce principe présente des performances limitées compte tenu des dérives aléatoires de sensibilité et d'offsets des capteurs ;
- un dispositif de blindage magnétique doit être utilisé afin de s'affranchir de toute perturbation magnétique extérieure ;
- les éléments sensibles doivent être positionnés finement en face de la transition magnétique afin de minimiser l'offset magnétique, et la dérive du zéro en température qui en découle.

On connaît par ailleurs des dispositifs aptes à détecter le déplacement d'une source de champ magnétique et comprenant plusieurs sondes de Hall combinées entre elles par sous ensemble et placées sur un tracé prédéterminé, éventuellement rectiligne.

Les documents WO-A-94 05 974 et WO-A-94 05 975 décrivent des dispositifs comprenant des éléments à effet Hall disposés à distance prédéterminée les uns des autres sur un tracé prédéterminé.

Le document EP-A-590 222 décrit un capteur de position magnétique apte à détecter la position d'un élément magnétique ayant une composante de champ qui s'annule en au moins un point de l'espace, ce capteur comprenant un réseau de sondes de Hall alignées dans une direction perpendiculaire à ladite composante de champ et au courant circulant au travers des sondes. On peut se référer également au document EP-A-591 113.

Le document WO-A-93 22 623 décrit un appareil générant un signal cumulatif représentant la position d'un aimant par rapport à une série linéaire de commutateurs à effet Hall.

L'invention se rapporte à un capteur de couple utilisant la technologie des capteurs à effet Hall ou à magnéto-resistance, ne présentant pas les inconvénients des capteurs connus de l'art antérieur. L'invention est donnée avec les revendications indépendantes 1, 5, 10-12.

A cet effet, et selon un premier aspect, l'invention propose un capteur de couple pour la détermination du couple exercé sur un ensemble comprenant une pièce génératrice d'impulsions magnétiques, ledit capteur comportant une pluralité d'éléments sensibles alignés divisés en au moins deux sous-ensembles, les signaux issus de ces sous-ensembles étant traités par un circuit électronique apte à délivrer un signal analogique fonction du couple exercé.

Les éléments sensibles, par exemple en nombre pair, sont choisis parmi les groupes comprenant les sondes à effet Hall, les magnéto-résistances, les magnéto-résistances géantes et sont placés à équidistance les uns des autres.

Selon un deuxième aspect, l'invention propose un procédé de traitement des signaux issus d'un capteur tel que présenté ci dessus qui comprend les étapes suivantes :

- création de au moins deux sous-ensembles de N éléments sensibles ;
- sommation des signaux issus de chaque élément sensible du premier sous-ensemble de sorte à former une première somme $S_1$ ;
- sommation des signaux issus de chaque élément sensible du second sous-ensemble de sorte à former une deuxième somme $S_2$ ;
- addition des signaux $S_1$ et - $S_2$ de sorte à obtenir un signal fonction du couple exercé.

La sélection du nombre pair d'éléments sensibles choisi pour la création des sous-ensembles d'éléments sensibles est effectuée par programmation de type EEPROM, ZENER ZAPPING ou équivalent.

En variante, un nombre d'éléments sensibles multiple de quatre est employé pour former quatre sous-ensembles de P éléments sensibles, le procédé comportant les étapes de :

- sommation des signaux issus de chaque élément sensible du premier sous-ensemble, de sorte à former un signal $S_1$ ;
- sommation des signaux issus de chaque élément sensible du deuxième sous-ensemble, dé sorte à

former un signal $S_2$ ;

- sommation des signaux issus de chaque élément sensible du troisième sous-ensemble, de sorte à former un signal $S'_1$ ;
- sommation des signaux issus de chaque élément sensible du quatrième sous-ensemble, de sorte à former un signal $S'_2$ ;
- établissement des signaux SIN = $S_1$-$S_2$ - ($S'_1$-$S'_2$) et/ou COS = $S_1$+$S_2$ - ($S'_1$+$S'_2$) et/ou SIN + COS de sorte à obtenir au moins un signal fonction du couple exercé.

En sous variante, un gain programmable G est appliqué au signal COS et/ou au signal SIN, de sorte à obtenir un signal SIN + G.COS ou G.SIN + COS fonction du couple exercé dont l'intensité est nulle lorsque le couple exercé est nul.

Le procédé peut comprendre les étapes de :

- détection du signal maximal issu de chaque élément sensible ;
- régulation de la sensibilité du capteur en fonction du signal maximal détecté.

Selon un troisième aspect, l'invention propose un dispositif pour la mise en oeuvre du procédé tel que présenté ci-dessus, comprenant un circuit intégré personnalisé type ASIC.

Selon un quatrième aspect, l'invention propose un ensemble capteur de couple tel que présenté ci-dessus, associé à un tel dispositif, dans lequel les éléments sensibles du capteur sont inclus dans le circuit intégré personnalisé ASIC.

Selon un ciquième aspect, l'invention concerne l'application de l'ensemble présenté ci-dessus à la détermination du couple par la détection du mouvement relatif entre les éléments sensibles du capteur de couple et au moins deux paires de pôles magnétiques à direction d'aimantation inversée d'un pôle donné par rapport à ceux qui lui sont contigus de sorte à réduire les effets de bord et à obtenir un champ magnétique sinusoïdal sur toute la zone de mesure.

D'autres objets et avantages de l'invention apparaîtront au cours de la description suivante d'un mode de réalisation, description qui va être effectuée en référence aux dessins annexés dans lesquels :

- la figure 1 représente un mode de réalisation du dispositif de détection suivant l'invention ;
- la figure 2 représente un deuxième mode de réalisation du dispositif de détection suivant l'invention.

Le dispositif de détection 1 comprend un nombre pair 2N d'éléments sensibles 2 de type magnétorésistance ou sonde à effet Hall, placés à égal distance d entre eux, ces éléments 2 étant sensiblement disposés le long d'une droite D, par exemple les éléments sensibles 2 peuvent être disposés sur un arc de cercle qui peut être approximé à une droite.

Dans les modes de réalisation représentés, vingt-quatre éléments sensibles 2 sont prévus.

Cet agencement définit une barrette 3 d'éléments sensibles 2 de longueur (2N-1)d.

Le dispositif de détection comprend également un circuit électronique 4 permettant de traiter les signaux analogiques issus des différents éléments sensibles 2 afin d'obtenir des informations telles que par exemple, la position angulaire d'une pièce magnétique multipolaire placée en regard de la barrette 3.

Le dispositif de détection peut être intégré sur un substrat en silicium ou équivalent par exemple AsGa, de sorte à former un circuit intégré et personnalisé pour application spécifique, circuit parfois désigné sous le terme ASIC pour faire référence au circuit intégré conçu partiellement ou complètement en fonction des besoins.

Lorsque la pièce magnétique multipolaire comprend deux paires de pôles magnétiques à direction d'aimantation inversée d'un pôle donné par rapport à ceux qui lui sont contigus, l'induction magnétique à l'entrefer considéré peut être assimilée à une forme sinusoïdale sur toute la zone de mesure et ne présente donc pas de déformation due aux effets de bords. En effet, la présence de deux pôles supplémentaires permet de repousser les effets de bords en dehors de la zone de mesure. La période magnétique du champ est alors définie comme la période de l'onde sinusoïdale délivrée à l'entrefer.

Dans les modes de réalisations représentés, la barrette 3 d'éléments sensibles 2 recouvre une période magnétique complète.

En variante, lorsque la barrette 3 d'éléments sensibles 2 détecte plus d'une période magnétique, on peut réduire la longueur de la barrette 3 d'éléments sensibles 2 à 2M élérnents utilisés sur les 2N (M étant inférieur à N), par programmation, par exemple de type EEPROM ou ZENER ZAPPING.

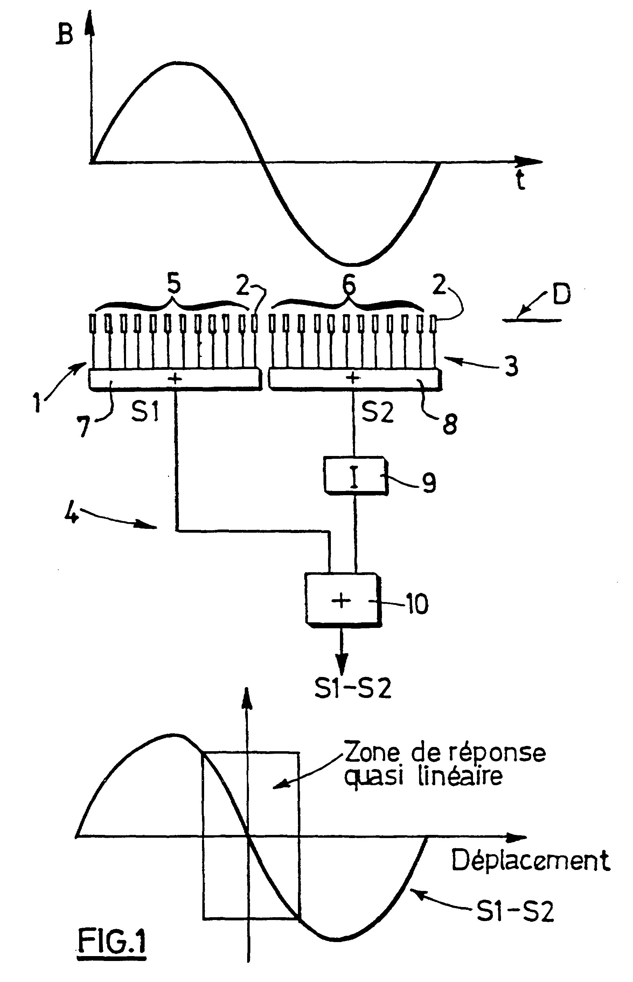

Dans le mode de réalisation de la figure 1, l'ensemble des éléments sensibles 2 est divisé en deux sous-ensembles 5, 6 de N éléments.

Chaque élément sensible 2 du premier sous-ensemble 5 est connecté à un premier additionneur 7 tel que l'amplificateur assurant la sommation des signaux issus des N premiers éléments sensibles 2.

De même, chaque élément sensible 2 du second sous-ensemble 6 est connecté à un deuxième additionneur 8 assurant la sommation des signaux issus des N autres éléments sensibles.

La sortie $S_1$ du premier moyen additionneur 7 et, via un inverseur 9, la sortie $S_2$ du deuxième moyen additionneur 8 sont connectées à l'entrée d'un troisième moyen additionneur 10.

A la sortie du troisième moyen additionneur 10 apparaît alors le signal $S_1$-$S_2$ qui est fonction du couple exercé (i.e. du déplacement relatif de la barrette 3 face à la pièce magnétique).

Dans ce premier mode de réalisation, la barrette 3 d'éléments sensibles 2 est positionnée, sous couple nul, en face de la pièce magnétique.

La variation du signal $S_1$-$S_2$ délivré en fonction du déplacement de la pièce magnétique devant la barrette 3 d'éléments sensibles 2 est alors sinusoïdale centrée sur zéro (voir figure 1). Il apparaît qu'en choisissant une raideur appropriée à la plage de mesure du couple, on obtient une sortie quasi linéaire en fonction du couple.

L'offset magnétique correspond à une composante continue qui s'additionne aux signaux détectés $S_1$ et $S_2$. Toutefois, l'offset magnétique ou les perturbations magnétiques extérieures étant supposés uniforme sur l'ensemble des éléments sensibles, la soustraction $S_1$-$S_2$ ne comporte pas de composante continue liée à l'offset magnétique.

En variante (non représentée) de ce mode de réalisation, la sortie $S_1$ du premier moyen additionneur 7 et la sortie $S_2$ du deuxième moyen additionneur 8 sont connectées à un moyen additionneur supplémentaire de sorte à former le signal $S_1 + S_2$.

Un moyen de s'affranchir du positionnement précis de la barrette 3 d'éléments sensibles 2 en face de la pièce magnétique est alors de former une combinaison linéaire des signaux $S_1 + S_2$ et $S_1 - S_2$ en amplifiant l'un de ces deux signaux à l'aide d'un gain programmable G. Cette approche est décrite ci-dessous en relation avec le deuxième mode de réalisation.

Toutefois le signal fonction du couple exercé ainsi obtenu n'est pas exempt d'offset magnétique du codeur ni des perturbations extérieures car le signal $S_1 + S_2$ est obtenu par sommation de $S_1$ et de $S_2$.

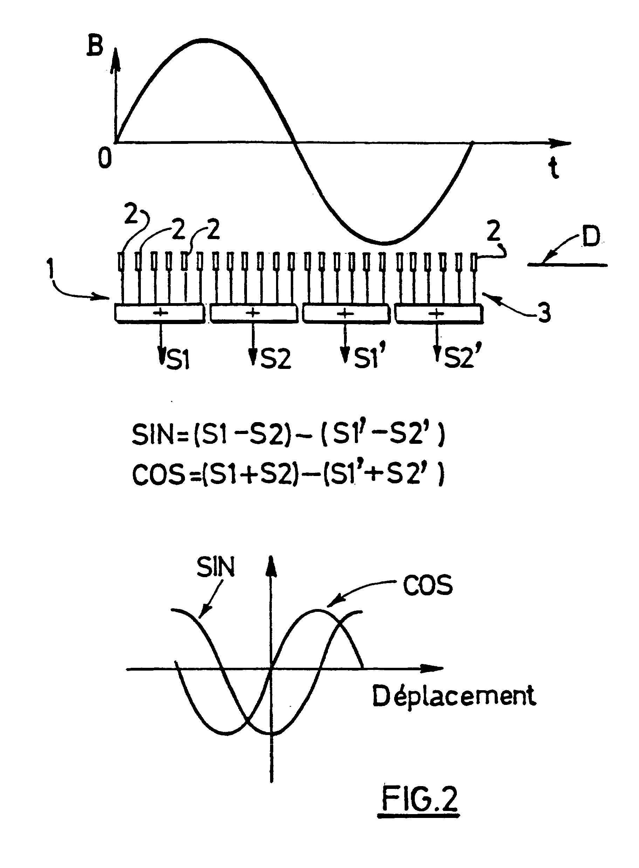

Le deuxième mode de réalisation représenté sur la figure 2 permet de s'affranchir du positionnement précis de la barrette 3 d'éléments sensibles 2 en face de la pièce magnétique tout en utilisant un signal fonction du couple exercé qui soit exempt d'offset magnétique.

La barrette 3 d'éléments sensibles 2 est décomposée en quatre quadrants à P éléments sensibles et un circuit électronique à base d'amplificateur additionneur et d'inverseur permet d'obtenir les signaux $S_1$, $S_2$, $S'_1$ et $S'_2$ issus respectivement des premier, deuxième, troisième et quatrième sous-ensembles à P éléments sensibles d'une barrette à 4P éléments sensibles.

Les signaux analogiques formés sont alors les suivants :

$$SIN = (S_1\text{-}S_2)\text{-}(S'_1\text{-}S'_2),$$

et

$$COS = (S_1\text{+}S_2)\text{-}(S'_1\text{+}S'_2).$$

Le dispositif de détection décrit délivre deux signaux SIN et COS en quadrature parfaite qui sont également exempt d'offset magnétique car il sont obtenus par soustraction de quadrants.

Ces deux signaux ou leur somme est fonction du couple exercé (i.e. du déplacement relatif de la barrette 3 face à la pièce magnétique).

Un décalage dans le positionnement de la barrette 3 d'éléments sensibles 2 devant la pièce magnétique induit sur les signaux de sortie une dérive du zéro (i.e. le signal est non nul sous couple nul dans le cas d'un mauvais centrage).

Un moyen de s'affranchir de ce problème est d'amplifier le signal SIN et/ou le signal COS à l'aide d'un gain programmable G, puis d'établir, à l'aide d'un moyen additionneur, la somme de ces signaux amplifiés.

Par exemple, dans le cas où seul le signal COS est amplifié, le signal utilisé pour mesurer le couple exercé est alors SIN + G.COS.

Un exemple de réalisation du réglage du zéro peut alors consister à positionner grossièrement la barrette 3 d'éléments sensibles 2 en face de la pièce magnétique puis de régler le gain G par programmation afin que le signal SIN + G.COS soit nul sous couple nul.

En variante des deux modes de réalisation décrits ci-dessus, le capteur de couple fournit un signal analogique indépendant de la température.

A cet fin, les signaux issus de chaque éléments sensibles 2 sont connectés à un moyen de détection qui permet de sélectionner le signal maximal. En fonction de celui-ci et, via un régulateur du courant injecté dans les éléments sensibles 2, la sensibilité de l'ensemble des éléments sensibles 2 est ajustée de sorte à obtenir un signal à la sortie du capteur qui soit d'amplitude constante et indépendant de la température.

De même, il apparaît qu'un tel dispositif permet d'obtenir à la sortie du capteur de couple un signal indépendant des variations d'entrefer.

## Revendications

1. Capteur de couple pour la détermination du couple exercé sur un ensemble comprenant une pièce génératrice d'impulsions magnétiques, ledit capteur comportant une pluralité d'éléments sensibles (2) alignés, **caractérisé en ce que** les éléments sensibles (2) sont divisés en au moins deux sous-ensembles, les éléments sensibles (2) de chaque sous-ensemble étant connectés à un moyen additionneur (7, 8) de sorte que les signaux issus de chaque élément sensible (2) de ces sous-ensembles soient additionnés pour former au moins deux sommes ($S_1$, $S_2$, $S_1'$, $S_2'$), lesdites sommes étant traitées par un circuit électronique apte à délivrer un signal analogique fonction du couple exercé.

2. Capteur selon la revendication 1, **caractérisé en ce que** les éléments sensibles (2) sont choisis parmi les groupes comprenant les sondes à effet Hall, les magnéto-résistances, les magnéto-résistances géantes.

3. Capteur selon la revendication 1 ou 2, **caractérisé en ce que** les éléments sensibles (2) sont placés à équidistance les uns des autres.

4. Capteur selon l'une quelconque des revendications 1 à 3, **caractérisé en ce que** le nombre des éléments sensibles (2) est pair.

5. Procédé de traitement des signaux issus d'un capteur tel que présenté dans l'une quelconque des revendications 1 à 4, **caractérisé en ce qu'**il comprend les étapes suivantes :

   - création de au moins deux sous-ensembles (5, 6) de N éléments sensibles (2) ;
   - sommation des signaux issus de chaque élément sensible (2) du premier sous-ensemble (5) de sorte à former une première somme $S_1$ ;
   - sommation des signaux issus de chaque élément sensible (2) du second sous-ensemble (6) de sorte à former une deuxième somme $S_2$ ;
   - addition des signaux $S_1$ et - $S_2$ de sorte à obtenir un signal fonction du couple exercé.

6. Procédé selon la revendication 5, **caractérisé en ce que** la sélection du nombre pair d'éléments sensibles (2) choisi pour la création des sous-ensembles d'éléments sensibles (2) est effectuée par programmation de type EEPROM, ZENER ZAPPING ou équivalent.

7. Procédé selon la revendication 5 ou 6, **caractérisé en ce qu'**un nombre d'éléments sensibles (2) multiple de quatre est employé pour former quatre sous-ensembles de P éléments sensibles, le procédé comportant les étapes de:

   - sommation des signaux issus de chaque élément sensible (2) du premier sous-ensemble, de sorte à former un signal $S_1$ ;
   - sommation des signaux issus de chaque élément sensible (2) du deuxième sous-ensemble, de sorte à former un signal $S_2$ ;
   - sommation des signaux issus de chaque élément sensible (2) du troisième sous-ensemble, de sorte à former un signal $S'_1$ ;
   - sommation des signaux issus de chaque élément sensible (2) du quatrième sous-ensemble, de sorte à former un signal $S'_2$ ;
   - établissement des signaux SIN = $S_1$-$S_2$ - ($S'_1$-$S'_2$) et/ou COS = $S_1$+$S_2$ - ($S'_1$+$S'_2$) et/ou SIN + COS de sorte à obtenir au moins un signal fonction du couple exercé.

8. Procédé selon la revendication 7, **caractérisé en ce qu'**un gain programmable G est appliqué au signal COS et/ou au signal SIN, de sorte à obtenir un signal SIN + G.COS ou G.SIN + COS fonction du couple exercé dont l'intensité est nulle lorsque le couple exercé est nul.

9. Procédé selon l'une quelconque des revendications 5 à 8, **caractérisé en ce qu'**il comprend les étapes de :

   - détection du signal maximal issu de chaque élément sensible (2) ;
   - régulation de la sensibilité du capteur en fonction du signal maximal détecté.

10. Dispositif pour la mise en oeuvre du procédé tel que présenté dans les revendications 5 à 9, **caractérisé en ce qu'**il comprend un circuit intégré personnalisé type ASIC.

11. Ensemble capteur de couple tel que présenté dans les revendications 1 à 4, associé à un dispositif selon la revendication 10, **caractérisé en ce que** les éléments sensibles (2) du capteur sont inclus dans le circuit intégré personnalisé ASIC.

12. Application de l'ensemble présenté en revendication 11 à la détermination du couple par la détection du mouvement relatif entre les éléments sensibles (2) du capteur de couple et au moins deux paires de pôles magnétiques à direction d'aimantation inversée d'un pôle donné par rapport à ceux qui lui sont contigus de sorte à réduire les effets de bord et à obtenir un champ magnétique sinusoïdal sur toute la zone de mesure.

**Claims**

1. A torque sensor for determining the torque exerted on an assembly comprising a part generating magnetic pulses, the said sensor comprising a plurality of aligned sensitive elements (2), **characterised in that** the sensitive elements (2) are divided into at least two subassemblies, the sensitive elements (2) in each subassembly being connected to an adding means (7, 8) so that the signals issuing from each sensitive element (2) in these subassemblies are added in order to form at least two sums ($S_1$, $S_2$, $S_1'$, $S_2'$), the said sums being processed by an electronic circuit able to deliver an analogue signal which is a function of the torque exerted.

2. A sensor according to Claim 1, **characterised in that** the sensitive elements (2) are chosen from amongst the group comprising Hall effect sensors, magnetoresistors and giant magnetoresistors.

**3.** A sensor according to Claim 1 or 2, **characterised in that** the sensitive elements (2) are placed at equal distances from each other.

**4.** A sensor according to any one of Claims 1 to 3, **characterised in that** the number of sensitive elements (2) is even.

**5.** A method of processing signals issuing from a sensor as presented in any one of Claims 1 to 4, **characterised in that** it comprises the following steps:

- creating at least two subassemblies (5, 6) of N sensitive elements (2);

- adding the signals issuing from each sensitive element (2) in the first subassembly (5) so as to form a first sum $S_1$;

- adding the signals issuing from each sensitive element (2) in the second subassembly (6) so as to form a second sum $S_2$;

- adding signals $S_1$ and $- S_2$ so as to obtain a signal which is a function of the torque exerted.

**6.** A method according to Claim 5, **characterised in that** the selection of the even number of sensitive elements (2) chosen for creating the subassemblies of sensitive elements (2) is made by programming of the EEPROM, Zener Zapping or equivalent type.

**7.** A method according to Claim 5 or 6, **characterised in that** a number of sensitive elements (2) which is a multiple of four is employed in order to form four subassemblies of P sensitive elements, the method comprising the steps of:

- adding the signals issuing from each sensitive element (2) in the first subassembly, so as to form a signal $S_1$;

- adding the signals issuing from each sensitive element (2) in the second subassembly so as to form a signal $S_2$;

- adding the signals issuing from each sensitive element (2) in the third subassembly so as to form a signal $S'_1$;

- adding the signals issuing from each sensitive element (2) in the fourth subassembly so as to form a signal $S'_2$;

- establishing the signals SIN = $S_1$-$S_2$ - ($S'_1$-$S'_2$) and/or COS = $S_1$+$S_2$ - ($S'_1$+$S'_2$) and/or SIN + COS so as to form at least one signal which is a function of the torque exerted.

**8.** A method according to Claim 7, **characterised in that** a programmable gain G is applied to the signal COS and/or to the signal SIN so as to obtain a signal SIN + G.COS or G.SIN + COS which is a function of the torque exerted, the intensity of which is zero when the torque exerted is zero.

**9.** A method according to any one of Claims 5 to 8, **characterised in that** it comprises the steps of:

- detecting the maximum signal issuing from each sensitive element (2);

- regulating the sensitivity of the sensor according to the maximum signal detected.

**10.** A device for implementing the method as presented in Claims 5 to 9, **characterised in that** it comprises a personalised integrated circuit of the ASIC type.

**11.** A torque sensor assembly as presented in Claims 1 to 4 associated with a device according to Claim 10, **characterised in that** the sensitive elements (2) of the sensor are included in the personalised integrated circuit ASIC.

**12.** Application of the assembly presented in Claim 11 to the determination of the torque by detecting the relative movement between the sensitive elements (2) of the torque sensor and at least two pairs of magnetic poles with a magnetisation direction reversed for a given pole with respect to those which are contiguous with it so as to reduce the edge effects and to obtain a sinusoidal magnetic field over the entire measurement area.

**Patentansprüche**

**1.** Drehmomentsensor für die Bestimmung des auf einen Aufbau ausgeübten Drehmoments mit einem magnetische Impulse generierenden Teil, wobei der genannte Sensor eine Vielzahl von fluchtrechten sensiblen Elementen (2) umfasst, **dadurch gekennzeichnet, dass** die sensiblen Elemente (2) in wenigstens zwei Unteraufbauten unterteilt sind, wobei die sensiblen Elemente (2) jedes Unteraufbaus derart an ein Addierwerk-Mittel (7, 8) angeschlossen sind, dass die aus jedem sensiblen Element (2) stammenden Signale dieser Unteraufbauten addiert werden, um wenigstens zwei Summen (S1, S2, S1', S2') zu bilden, wobei die genannten Summen durch einen zur Ausgabe eines analogen Signals in Abhängigkeit des ausgeübten Drehmoments geeigneten elektronischen Schaltkreis bearbeitet werden.

**2.** Sensor gemäß Anspruch 1, **dadurch gekenn-**

**zeichnet, dass** die sensiblen Elemente (2) aus der Gruppe ausgewählt werden, umfassend Hallsensoren, Magnetoresistenzen, Riesen-Magnetoresistenzen.

3. Sensor gemäß Anspruch 1 oder 2, **dadurch gekennzeichnet, dass** die sensiblen Elemente (2) voneinander in gleicher Entfernung beabstandet sind.

4. Sensor gemäß Anspruch 1 bis 3, **dadurch gekennzeichnet, dass** die Anzahl der sensiblen Elemente (2) geradzahlig ist.

5. Verfahren zur Bearbeitung von aus einem Sensor gemäß Anspruch 1 bis 4 stammenden Signalen, **dadurch gekennzeichnet, dass** er die folgenden Stufen umfasst:

   - Erstellung von wenigstens zwei Unteraufbauten (5, 6) von N sensiblen Elementen (2);

   - Summierung der aus jedem sensiblen Element (2) des ersten Unteraufbaus (5) stammenden Signale, so dass eine erste Summe S1 gebildet wird;

   - Summierung der aus jedem sensiblen Element (2) des zweiten Unteraufbaus (6) stammenden Signale, so dass eine zweite Summe S2 gebildet wird;

   - Addition der Signale S1 und - S2, so dass ein Funktionssignal des ausgeübten Drehmoments erhalten wird.

6. Verfahren gemäß Anspruch 5, **dadurch gekennzeichnet, dass** die Auswahl der für die Erstellung der Unteraufbauten sensibler Elemente (2) gewählten paarweisen Anzahl sensibler Elemente (2) durch Programmierung vom Typ EEPROM, ZENER ZAPPING oder dergleichen durchgeführt wird.

7. Verfahren gemäß Anspruch 5 oder 6, **dadurch gekennzeichnet, dass** eine mit vier multiplizierte Anzahl sensibler Elemente (2) zur Bildung von vier Unteraufbauten von P sensiblen Elementen verwendet wird, wobei das Verfahren die folgenden Stufen umfasst:

   - Summierung der aus jedem sensiblen Element (2) des ersten Unteraufbaus stammenden Signale, so dass ein Signal S1 gebildet wird;

   - Summierung der aus jedem sensiblen Element (2) des zweiten Unteraufbaus stammenden Signale, so dass ein Signal S2 gebildet wird;

   - Summierung der aus jedem sensiblen Element (2) des dritten Unteraufbaus stammenden Signale, so dass ein Signal S'1 gebildet wird;

   - Summierung der aus jedem sensiblen Element (2) des vierten Unteraufbaus stammenden Signale, so dass ein Signal S'2 gebildet wird;

   - Erstellung der Signale SIN = S1 - S2 - (S'1 - S'2) und / oder COS = S1 + S2 - (S'1 + S'2) und / oder SIN + COS, so dass wenigstens ein Funktionssignal des ausgeübten Drehmoments erhalten wird.

8. Verfahren gemäß Anspruch 7, **dadurch gekennzeichnet, dass** eine programmierbare Verstärkung G auf das Signal COS und / oder auf das Signal SIN derart ausgeübt wird, dass ein Signal SIN + G.COS oder G.SIN + COS als Funktion des ausgeübten Drehmoments erhalten wird, dessen Intensität null ist, wenn das ausgeübte Drehmoment null ist.

9. Verfahren gemäß Anspruch 5 bis 8, **dadurch gekennzeichnet, dass** es die folgenden Stufen umfasst:

   - Feststellung des aus jedem sensiblen Element (2) stammenden maximalen Signals;

   - Regulierung der Sensibilität des Sensors in Abhängigkeit des festgestellten maximalen Signals.

10. Vorrichtung für die Umsetzung des Verfahrens gemäß Anspruch 5 bis 9, **dadurch gekennzeichnet, dass** es einen individuell gestalteten integrierten Schaltkreis vom Typ ASIC umfasst.

11. Einer Vorrichtung gemäß Anspruch 10 zugeordneter Drehmomentsensor-Aufbau gemäß Anspruch 1 bis 4, **dadurch gekennzeichnet, dass** die sensiblen Elemente (2) des Sensors im individuell gestalteten integrierten Schaltkreis ASIC inbegriffen sind.

12. Anwendung des Aufbaus gemäß Anspruch 11 zur Bestimmung des Drehmoments durch die Feststellung der relativen Bewegung zwischen den sensiblen Elementen (2) des Drehmomentsensors und wenigstens zwei magnetischen Polpaaren mit umgekehrter Magnetisierungsrichtung eines bestimmten Pols im Verhältnis zu denen, die ihm angrenzend sind, so dass die Randeffekte reduziert werden und die ein sinusförmiges magnetisches Feld über den gesamten Messbereich erhalten wird.

Zone de réponse quasi linéaire

S1-S2

FIG.1

Déplacement

$$SIN=(S1-S2)-(S1'-S2')$$
$$COS=(S1+S2)-(S1'+S2')$$

**FIG.2**